(19) Europäisches Patentamt
European Patent Office
Office européen des brevets

(11) EP 4 763 876 A1

(12) EUROPEAN PATENT APPLICATION
published in accordance with Art. 153(4) EPC

(43) Date of publication:
**24.06.2026 Bulletin 2026/26**

(21) Application number: **24854299.5**

(22) Date of filing: **27.06.2024**

(51) International Patent Classification (IPC):
***C08F 210/16*** (2006.01) ***C08F 4/6592*** (2006.01)
***C08F 4/659*** (2006.01) ***C08F 2/04*** (2006.01)
***C08F 2/44*** (2006.01)

(52) Cooperative Patent Classification (CPC):
**C08F 2/04; C08F 2/44; C08F 4/659; C08F 4/6592; C08F 210/16**

(86) International application number:
**PCT/KR2024/009000**

(87) International publication number:
**WO 2025/037746 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.08.2023 KR 20230107596**

(71) Applicant: **Hanwha Solutions Corporation**
**Jung-gu**
**Seoul 04541 (KR)**

(72) Inventors:
- **JUN, Sung Hae**
  **Daejeon 34128 (KR)**
- **PARK, Ranwha**
  **Daejeon 34128 (KR)**
- **LEE, Won Jong**
  **Daejeon 34128 (KR)**
- **KIM, Kyung Woo**
  **Daejeon 34128 (KR)**
- **PARK, Seong Yeon**
  **Daejeon 34128 (KR)**
- **JEONG, Taeho**
  **Daejeon 34128 (KR)**
- **KIM, Dong Wook**
  **Daejeon 34128 (KR)**

(74) Representative: **Berggren Oy**
**P.O. Box 16**
**Fabianinkatu 21**
**00101 Helsinki (FI)**

# (54) METHOD FOR SOLUTION POLYMERIZATION OF ETHYLENE-ALPHA-OLEFIN COPOLYMER USING TRANSITION METAL COMPOUND

(57) The solution polymerization method for an ethylene-α-olefin copolymer according to the present disclosure can not only provide an ethylene-α-olefin copolymer having a low density and a broad molecular weight distribution, but can also produce ethylene-α-olefin copolymers having a large difference in molecular weight depending on the amount of hydrogen introduced.

EP 4 763 876 A1

## Description

### Technical Field

The present disclosure relates to a solution polymerization method for an ethylene-α-olefin copolymer.

### Background Art

Conventional catalysts used for the polymerization of olefin polymers include metallocene catalysts and Ziegler-Natta catalysts, and each of these two types of conventional catalysts possesses different characteristics in terms of the molecular weight, molecular structure, density, and melt flow index of the olefin polymers produced.

Because the Ziegler-Natta catalyst has non-uniform active sites due to the non-uniform dispersion of metal components on a solid surface, olefin polymers produced using the catalyst exhibit a wide molecular weight distribution, and the catalyst is thus suitable for providing olefin polymers having diverse molecular structures. Accordingly, olefin polymers used as materials for conventional films, containers, cables, pipes, or fibers are polymer resins having a wide molecular weight distribution, a high melt flow index, and very low viscosity, and thus the production of polyolefins using the Ziegler-Natta catalyst has been preferred.

However, since the Ziegler-Natta catalyst has non-uniform active sites, it is not possible to precisely control the viscosity, molecular weight distribution, molecular structure, and comonomer repeating unit content targeted by a person skilled in the art. Consequently, it is difficult to polymerize an olefin polymer having optimal physical properties according to the material application.

The metallocene catalyst is one of the catalysts used for ethylene polymerization, in which ligands such as cyclopentadienyl, cycloheptadienyl, indenyl, or fluorenyl are coordination-bonded to a metal or a metal halide compound, and the catalyst basically has a parent structure in the form of a sandwich structure. Because all active sites of the metallocene catalyst are uniform, the catalyst has the advantage that, when producing an olefin polymer using the catalyst, an olefin polymer having a narrow molecular weight distribution and a uniform comonomer distribution can be produced.

For example, Patent Document 1 (U.S. Patent No. 5,272,236) discloses that, in the polymerization of an olefin polymer using a metallocene catalyst, the physical properties of the olefin polymer being polymerized are controlled by adjusting various polymerization conditions such as reaction temperature, monomer input amount, oxygen input amount, and stirring speed.

However, the conventional method of polymerizing an olefin polymer using a metallocene catalyst has the problem in which the physical properties of the olefin polymer produced cannot be dramatically controlled merely by adjusting the polymerization conditions.

Accordingly, the development of a new metallocene catalyst and a method of polymerizing a polymer by using the catalyst is required, which enables not only production of a polymer having a wide molecular weight distribution and a low density even when polymerized using a metallocene catalyst, but also production of a polymer of which physical properties, such as molecular weight, are more precisely controlled according to reaction conditions.

### Disclosure of Invention

### Technical Problem

An object of the present disclosure is to provide a solution polymerization method for an ethylene-α-olefin copolymer capable of producing an ethylene-α-olefin copolymer having a low density and a broad molecular weight distribution.

Another object of the present disclosure is to provide a solution polymerization method for an ethylene-α-olefin copolymer using a transition metal compound, which is capable of producing distinct ethylene-α-olefin copolymers having a large difference in weight average molecular weight under the same catalyst mixture, the same olefin monomers, and the same reaction conditions.

### Solution to Problem

The present disclosure may provide a solution polymerization method for an ethylene-α-olefin copolymer using a catalyst composition including a transition metal compound represented by Formula 1 and a cocatalyst, wherein the ethylene-α-olefin copolymer has a density of 0.90 g/cc or less as measured according to ASTM D1505 and a polydispersity index (PDI) of 2.0 or more.

[Formula 1]

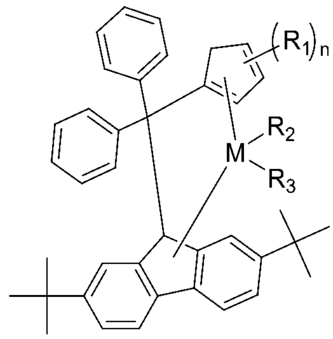

(In Formula 1, M is a metal of Group 4 of the periodic table; $R_1$ is a linear or branched $C_1$-$C_7$ alkyl; $R_2$ and $R_3$ are each independently hydrogen, a linear or branched $C_1$-$C_7$ alkyl, a $C_4$-$C_{20}$ cycloalkyl, or a $C_6$-$C_{20}$ aryl; and n is an integer of 0 to 3.)

In an embodiment of the present disclosure, in Formula 1, M may be Zr (zirconium) or Ti (titanium); $R_1$ may be a linear or branched $C_1$-$C_4$ alkyl; $R_2$ and $R_3$ may each independently be a linear or branched $C_1$-$C_4$ alkyl; and n may be 0 or 1.

In an embodiment of the present disclosure, the solution polymerization method for the ethylene-α-olefin copolymer may satisfy Expression 1:

[Expression 1]

$$2 \leq M_{w1}/M_{w0}$$

(In Expression 1, $M_{w1}$ is the weight average molecular weight of the ethylene-α-olefin copolymer produced without the addition of hydrogen, and $M_{w0}$ is the weight average molecular weight of the ethylene-α-olefin copolymer produced when hydrogen is introduced at 20,000 ppm relative to the total amount of feed materials.)

In an embodiment of the present disclosure, the ethylene-α-olefin copolymer may have a weight average molecular weight of 10,000 to 200,000 g/mol.

In an embodiment of the present disclosure, in the solution polymerization method for the ethylene-α-olefin copolymer, an internal reactor pressure may be 10 to 100 bar.

In an embodiment of the present disclosure, in the solution polymerization method for the ethylene-α-olefin copolymer, a polymerization reaction temperature may be 30 to 200 °C.

In an embodiment of the present disclosure, the cocatalyst may be at least one selected from the group consisting of N,N-diethylanilinium tetrakis(pentafluorophenyl)borate, N,N-2,4,6-pentamethylanilinium tetrakis(pentafluorophenyl) borate, and N,N-dimethylanilinium tetrakis(3,5-bis(trifluoromethyl)phenyl)borate.

In an embodiment of the present disclosure, the solution polymerization method for the ethylene-α-olefin copolymer may use at least one solvent selected from the group consisting of n-hexane, n-heptane, n-butane, n-pentane, n-octane, and cyclohexane.

In an embodiment of the present disclosure, the ethylene-α-olefin copolymer may be obtained by copolymerizing ethylene with at least one α-olefin selected from the group consisting of 1-octene, 1-hexene, and 1-butene.

In an embodiment of the present disclosure, the ethylene-α-olefin copolymer may have ethylene repeat units of 50 to 99 mol% based on the total repeat units.

In an embodiment of the present disclosure, the ethylene-α-olefin copolymer may have a melt flow index of 0.1 to 1,500 g/10min under a 2.16 kg load as measured according to ASTM D1238.

In an embodiment of the present disclosure, the solution polymerization method for the ethylene-α-olefin copolymer may include: a) preparing an α-olefin composition by mixing an α-olefin with a solvent; and b) preparing the ethylene-α-olefin copolymer through polymerization by introducing a catalyst composition into the α-olefin composition and introducing ethylene into a reactor.

In an embodiment of the present disclosure, the solution polymerization method for the ethylene-α-olefin copolymer may further include introducing hydrogen in b).

In an embodiment of the present disclosure, the solution polymerization method for the ethylene-α-olefin copolymer may further include at least one aluminum scavenger selected from the group consisting of trimethylaluminum, triethylaluminum, tripropylaluminum, triisobutylaluminum, and trihexylaluminum.

## Advantageous Effects of Invention

The solution polymerization method for the ethylene-α-olefin copolymer of the present disclosure enables easy production of products having various molecular weights over a wide range by adjusting the hydrogen input amount, without adjusting other reaction conditions such as separate monomer combinations or reaction temperatures depending on molecular weight. Accordingly, ethylene-α-olefin copolymers usable for various applications can be produced using a single reactor.

Because the solution polymerization method of the present disclosure can produce an ethylene-α-olefin copolymer having a low density and a broad molecular weight distribution, the produced ethylene-α-olefin copolymer can be usefully used for materials requiring excellent processability, such as films, wraps, or bottles.

## Brief Description of Drawings

## Best Mode for Carrying out the Invention

Hereinafter, the present disclosure will be described in further detail. However, the following specific examples or embodiments are merely illustrative of the present disclosure and are not intended to limit the scope thereof. The present disclosure may be embodied in various forms.

Unless otherwise defined, all technical and scientific terms used herein have the same meaning as commonly understood by one of ordinary skill in the art to which this invention belongs. The terminology used herein is for the purpose of describing particular embodiments only and is not intended to be limiting of the disclosure.

As used in the specification and the appended claims, the singular forms are intended to include the plural forms as well, unless the context clearly indicates otherwise.

As used herein, the term "comprising" or "including" is open-ended and does not exclude the presence of additional, unrecited elements or method steps, unless otherwise specified.

As used herein, the terms "about," "substantially," and the like are used to indicate values at or near the stated value when inherent manufacturing and material tolerances are considered, and are used to prevent unconscionable infringers from unfairly exploiting the disclosure of exact or absolute values that aid in understanding the disclosure.

One embodiment of the present disclosure may provide a solution polymerization method for producing an ethylene-α-olefin copolymer using a catalyst composition including a transition metal compound represented by Formula 1 and a cocatalyst.

[Formula 1]

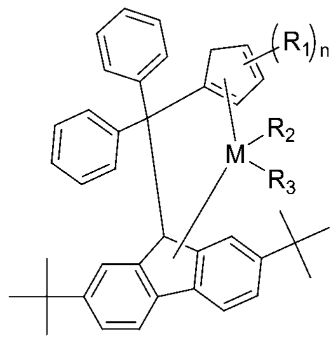

(In Formula 1, M is a metal of Group 4 on the periodic table; $R_1$ is a linear or branched $C_1$-$C_7$ alkyl; $R_2$ and $R_3$ are each independently hydrogen, a linear or branched $C_1$-$C_7$ alkyl, a $C_4$-$C_{20}$ cycloalkyl, or a $C_6$-$C_{20}$ aryl; and n is an integer of 0 to 3.)

Here, the ethylene-α-olefin copolymer produced by the solution polymerization method for the ethylene-α-olefin copolymer may have a density of 0.900 g/cc or less as measured according to ASTM D1505 and a PDI of 2.0 or more.

In one embodiment of the present disclosure, the ethylene-α-olefin copolymer may have a density of 0.900 g/cc or less, preferably 0.850 to 0.900 g/cc, and more preferably 0.860 to 0.880 g/cc, 0.860 to 0.879 g/cc, or 0.860 to 0.875 g/cc.

Since the ethylene-α-olefin copolymer has a low density in the aforementioned ranges, the copolymer may have high processability and may be particularly usefully used as a material for wraps, films, or bottles.

In one embodiment of the present disclosure, the ethylene-α-olefin copolymer may have a PDI of 2.0 or more, 2.5 or more, 3.0 or more, or 4.0 or more, and 5.0 or less, or any value therebetween.

The ethylene-α-olefin copolymer having a molecular weight distribution in the aforementioned ranges may simultaneously have brittleness and elasticity, and thus may be easy to mold by stretch molding or blown molding, and the like. In addition, articles produced including the copolymer may not break easily, and thus may be preferred.

The molecular weight distribution of the ethylene-α-olefin copolymer may become broader depending on the process scale of the solution polymerization method for the ethylene-α-olefin copolymer. As one example, when polymerization is performed on a laboratory scale as in Examples described later, the PDI may be 2.5 or more.

In an embodiment of the present disclosure, the solution polymerization method for the ethylene-α-olefin copolymer may satisfy Expression 1:

[Expression 1]

$$2 \leq M_{w1}/M_{w0}$$

(In Expression 1, $M_{w1}$ is the weight average molecular weight of the ethylene-α-olefin copolymer produced when hydrogen is not introduced, and $M_{w0}$ is the weight average molecular weight of the ethylene-α-olefin copolymer produced when hydrogen is introduced at 20,000 ppm relative to the total amount of feed materials.)

In Expression 1, "feed materials" may refer to all compounds introduced into the reactor, such as the solvent, monomers, and catalyst composition, and the like.

In another embodiment, in the solution polymerization method for the ethylene-α-olefin copolymer, the ratio $M_{w1}/M_{w0}$ in Expression 1 may be 2.5 or more, preferably 3.0 or more or 3.5 or more, and more preferably 4.0 or more; although the upper limit is not limited, the ratio may be 7.0 or less, 6.0 or less, or 5.0 or less.

By satisfying the aforementioned range of $M_{w1}/M_{w0}$, the solution polymerization method enables production of individual grades of ethylene-α-olefin copolymers having various molecular weights over a wide range. Accordingly, the produced copolymers may be used for applications requiring high to low flowability.

In another embodiment of the present disclosure, the solution polymerization method for the ethylene-α-olefin copolymer may control the molecular weight of the ethylene-α-olefin copolymer by adjusting the hydrogen input amount within a range of 100 ppm to 100,000 ppm, preferably 1,000 ppm to 50,000 ppm, even at hydrogen input amounts other than the specific amount defined in Expression 1.

In another embodiment according to Example 1 of the present disclosure, the ethylene-α-olefin copolymer has a weight average molecular weight of 146,100 g/mol when hydrogen is not introduced during polymerization. However, when polymerization is performed with 10,000 ppm, 20,000 ppm, and 30,000 ppm of hydrogen, the molecular weights are 56,049 g/mol, 34,059 g/mol, and 26,852 g/mol, respectively, and thus polymers having molecular weights that differ by more than 4-fold may be produced within the same polymerization system. That is, product diversity may be easily achieved without changing the catalyst.

Accordingly, the solution polymerization method for the ethylene-α-olefin copolymer may produce an ethylene-α-olefin copolymer having the low density in the aforementioned range and a broad molecular weight distribution by utilizing the catalyst composition including the transition metal compound of Formula 1, and thus the copolymer may be usefully used for materials requiring excellent processability, such as films, wraps, or bottles.

In addition, the solution polymerization method for the ethylene-α-olefin copolymer, when performing solution polymerization using the catalyst composition including the transition metal compound of Formula 1, may provide a low-molecular-weight polyolefin wherein the weight average molecular weight of the ethylene-α-olefin copolymer obtained by introducing 20,000 ppm of hydrogen relative to ethylene is 1/2, 1/3, or 1/4 or less of the weight average molecular weight of an ethylene-α-olefin copolymer polymerized using the same catalyst composition without introducing hydrogen.

In other words, the solution polymerization method for the ethylene-α-olefin copolymer may provide various grades of ethylene-α-olefin copolymers having different molecular weights for each polymerization lot simply by changing the hydrogen input amount while using the same transition metal compound, the same monomer combination, and the same reactor. Accordingly, individual ethylene-α-olefin copolymers having large differences in molecular weight may be produced in a small-volume reactor, and thus may be preferred.

In an embodiment of the present disclosure, the ethylene-α-olefin copolymer may have a weight average molecular weight of 10,000 to 200,000 g/mol, and in another embodiment, the weight average molecular weight may be

10,000 to 150,000 g/mol.

As described above, the weight average molecular weight of the ethylene-α-olefin copolymer may be adjusted according to the hydrogen input amount, thereby providing ethylene-α-olefin copolymers having various molecular weights over the broad range described above. Accordingly, the copolymers may be variously applied to materials requiring high molecular weights as well as materials requiring low molecular weights.

In an embodiment of the present disclosure, in the solution polymerization method for the ethylene-α-olefin copolymer, despite adopting the same catalyst composition, the produced ethylene-α-olefin copolymer may have a melt flow index of 0.1 to 1,500 g/10min, preferably 0.5 to 1,500 g/10min, and more preferably 1.0 to 1,500 g/10min, as measured under a 2.16 kg load according to ASTM D1238.

That is, by having a very large range of melt flow index, the solution polymerization method for the ethylene-α-olefin copolymer may produce resins requiring various processability and mechanical strength.

In an embodiment of the present disclosure, the ethylene-α-olefin copolymer may be copolymerized to include ethylene and at least one α-olefin selected from the group consisting of 1-octene, 1-hexene, and 1-butene. In another embodiment, the α-olefin may be 1-octene, 1-hexene, or a mixed monomer thereof, or 1-octene, though the α-olefin is not necessarily limited thereto.

In an embodiment of the present disclosure, the ethylene-α-olefin copolymer may have ethylene repeat units of 50 to 99 mol% based on the total repeat units, and in another embodiment, the ethylene repeat units may be 60 to 99 mol% or 70 to 99 mol%.

The ethylene-α-olefin copolymer containing ethylene repeat units in the aforementioned ranges may have the density in the range described above, and may also have excellent mechanical strength and high heat sealability. By having high heat sealability, the copolymer may be usefully used as a heat-sealable film, though not necessarily limited thereto.

Accordingly, one embodiment of the present disclosure may provide an ethylene-α-olefin copolymer having ethylene repeat units of 50 to 99 mol%, a density of 0.850 to 0.900 g/cc as measured according to ASTM D1505, a PDI of 2.0 to 5.0, and a weight average molecular weight of 10,000 to 200,000 g/mol.

Since the ethylene-α-olefin copolymer simultaneously satisfies the aforementioned physical properties, the copolymer may be usefully used as various resin components such as a main resin component or a wax component for materials such as films, wraps, or bottles.

In an embodiment of the present disclosure, the solution polymerization method for the ethylene-α-olefin copolymer may produce individual ethylene-α-olefin copolymers having various molecular weights with the aforementioned physical properties by using a catalyst composition including the transition metal compound of Formula 1 and a cocatalyst.

[Formula 1]

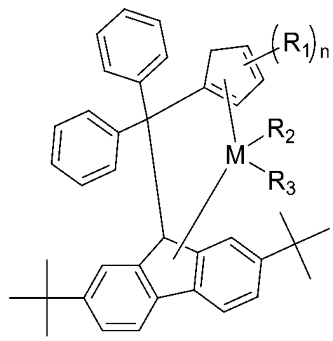

(In Formula 1, M is a metal of Group 4 on the periodic table; $R_1$ is a linear or branched $C_1$-$C_7$ alkyl; $R_2$ and $R_3$ are each independently hydrogen, a linear or branched $C_1$-$C_7$ alkyl, a $C_4$-$C_{20}$ cycloalkyl, or a $C_6$-$C_{20}$ aryl; and n is an integer of 0 to 3.)

Since the transition metal compound represented by Formula 1 has particularly excellent reactivity with hydrogen, the solution polymerization method for the ethylene-α-olefin copolymer using the compound may facilitate easy control of the weight average molecular weight of the produced ethylene-α-olefin copolymer simply by adjusting the hydrogen content introduced.

That is, the solution polymerization method for the ethylene-α-olefin copolymer according to one embodiment of the present disclosure

may be capable of controlling molecular weight over a broader range compared to the molecular weight diversity of ethylene-α-olefin copolymers produced using conventional transition metal compounds. Therefore, the solution polymerization method for the ethylene-α-olefin copolymer may not only produce copolymers for a more diverse range of applications using the same catalyst composition, but may also provide an ethylene-α-olefin copolymer having the targeted density and molecular weight distribution of the present disclosure.

In another embodiment of the present disclosure, in Formula 1, M may be Zr (zirconium) or Ti (titanium); $R_1$ may be a linear or branched $C_1$-$C_4$ alkyl; $R_2$ and $R_3$ may each independently be a linear or branched $C_1$-$C_4$ alkyl; and n may be 0 or 1. Preferably, in Formula 1, M is Zr; $R_1$ is ethyl or n-butyl; $R_2$ and $R_3$ are each independently methyl or ethyl; and the compound may have a structure where n is 0 or 1.

The solution polymerization method for the ethylene-α-olefin copolymer utilizing the transition metal compound of Formula 1 described above may produce ethylene-α-olefin copolymers having more diverse weight average molecular weights by adjusting the hydrogen content, and may also produce ethylene-α-olefin copolymers satisfying the density and molecular weight distribution in the ranges described above, and thus may be preferred.

In an embodiment of the present disclosure, the activity of the transition metal compound may be 400 kg(mPo)/g·hr(cat) or more, 500 kg(mPo)/g·hr(cat) or more, 550 kg(mPo)/g·hr(cat) or more, or 600 kg(mPo)/g·hr(cat) or more. Although the upper limit is not limited, the activity may be 800 kg(mPo)/g·hr(cat) or less or 700 kg(mPo)/g·hr(cat) or less.

The activity of the transition metal compound may be expressed as the amount (kg) of the ethylene-α-olefin copolymer (mPo) produced per hour relative to the amount (g) of the transition metal compound (cat) included in the solution polymerization method.

Since the transition metal compound possesses activity within the aforementioned range, the solution polymerization of the ethylene-α-olefin copolymer using the transition metal compound may achieve superior polymerization reactivity, and thus may be preferred.

Hereinafter, the solution polymerization method for the ethylene-α-olefin copolymer of the present disclosure will be described in more detail.

In an embodiment of the present disclosure, the solution polymerization method for the ethylene-α-olefin copolymer may include: a) preparing an α-olefin composition by mixing an α-olefin with a solvent; and b) preparing the ethylene-α-olefin copolymer through polymrization by introducing a catalyst composition into the α-olefin composition and introducing ethylene into a reactor.

In an embodiment of the present disclosure, the solution polymerization method for the ethylene-α-olefin copolymer may further include introducing hydrogen in b).

In the solution polymerization method for the ethylene-α-olefin copolymer, introducing hydrogen in b) may not only adjust the weight average molecular weight of the ethylene-α-olefin copolymer, but may also, by adjusting the hydrogen input amount during b), produce various types of ethylene-α-olefin copolymers having a wide range of weight average molecular weights.

In another embodiment of the present disclosure, the solution polymerization method for the ethylene-α-olefin copolymer may proceed by sequentially introducing hydrogen, the transition metal compound, ethylene, and the cocatalyst into the α-olefin composition.

In another embodiment, the solution polymerization method for the ethylene-α-olefin copolymer may proceed by contacting the transition metal compound, the cocatalyst, and ethylene in the presence of a solvent, wherein the transition metal compound and the cocatalyst components may be introduced into the reactor separately, or may be pre-mixed and then introduced into the reactor. Further, the mixing conditions such as introduction sequence, temperature, or concentration are not necessarily limited, provided that the physical properties of the ethylene-α-olefin copolymer are not impaired.

In an embodiment of the present disclosure, the solvent may be at least one selected from the group consisting of n-hexane, n-heptane, n-butane, n-pentane, n-octane, cyclohexane, and the like.

In another embodiment, the solvent may be n-hexane or cyclohexane, and n-hexane may be used alone from the perspective of excellent solubility of the α-olefin. However, the solvent is not necessarily limited thereto, provided that the α-olefin may be dissolved and the physical properties of the produced ethylene-α-olefin copolymer are not impaired.

In an embodiment of the present disclosure, the α-olefin may be at least one selected from the group consisting of 1-octene, 1-hexene, and 1-butene. Since this is the same as described above regarding the comonomer of the ethylene-α-olefin copolymer, a detailed description thereof is omitted.

In an embodiment of the present disclosure, the ethylene-α-olefin copolymer may have ethylene repeat units of 50 to 99 mol% based on the total repeat units, and in another embodiment, the ethylene repeat units may be 60 to 99 mol% or 70 to 99 mol%, though not necessarily limited thereto.

The ethylene-α-olefin copolymer produced including the α-olefin in the aforementioned range may have excellent mechanical strength, and by having high heat sealability, may be usefully used as a heat-sealable film, and thus may be preferred.

In an embodiment of the present disclosure, the α-olefin composition may include the α-olefin at a concentration of 0.1 to 1 M, and in another embodiment, the concentration may be 0.5 to 1 M, though not necessarily limited thereto.

In an embodiment of the present disclosure, the catalyst composition may be a mixture of the above-described transition metal compound and the cocatalyst.

In an embodiment of the present disclosure, the cocatalyst is not particularly limited provided that it is recognizable by a person skilled in the art, but may be at least one selected from the group consisting of N,N-diethylanilinium tetrakis(pentafluorophenyl)borate, N,N-2,4,6-pentamethylanilinium tetrakis(pentafluorophenyl)borate, and N,N-dimethylanilinium tetrakis(3,5-bis(trifluoromethyl)phenyl)borate, and the like.

In another embodiment of the present disclosure, in the solution polymerization method for the ethylene-α-olefin copolymer, using N,N-diethylanilinium tetrakis(pentafluorophenyl)borate or N,N-2,4,6-pentamethylanilinium tetrakis(pentafluorophenyl)borate, or N,N-dimethylanilinium tetrakis(3,5-bis(trifluoromethyl)phenyl)borate as the cocatalyst may facilitate control of the molecular weight of the produced ethylene-α-olefin copolymer, though not necessarily limited thereto.

In an embodiment of the present disclosure, the catalyst composition may be a mixture of the transition metal compound and the cocatalyst mixed at a molar ratio of 1:5 or more, for example, 1:5 to 1:10, and in another embodiment, the molar ratio may be 1:5 to 1:8 or 1:5 to 1:7.

The catalyst composition satisfying the aforementioned molar ratio does not impair the physical properties of the transition metal compound, and the activity of the transition metal compound is increased, such that the solution polymerization method for the ethylene-α-olefin copolymer including the catalyst composition may have excellent polymerization reactivity, though not necessarily limited thereto.

The solution polymerization method for the ethylene-α-olefin copolymer has excellent polymerizability of the transition metal compound represented by Formula 1 and has excellent reactivity with hydrogen, and thus may produce ethylene-α-olefin copolymers having a large difference in weight average molecular weight, as in Expression 1 below.

In an embodiment of the present disclosure, in the solution polymerization method for the ethylene-α-olefin copolymer, an internal reactor pressure may be 10 to 100 bar, and in another embodiment, the internal reactor pressure may be 20 to 80 bar or 20 to 50 bar.

The internal reactor pressure of the solution polymerization method for the ethylene-α-olefin copolymer may be preferred from the perspective of the produced ethylene-α-olefin copolymer having the targeted weight average molecular weight, ethylene repeat unit content, and molecular weight distribution, though not particularly limited provided that it is recognizable by a person skilled in the art.

In another embodiment of the present disclosure, in the solution polymerization method for the ethylene-α-olefin copolymer, ethylene (gas) may be introduced at an internal reactor pressure of 10 to 30 bar, or 15 to 25 bar. However, since this may vary depending on the volume of the reactor, it is not necessarily limited thereto.

The ethylene-α-olefin copolymer produced by introducing ethylene at a pressure in the aforementioned range may contain the targeted ethylene repeat units, and thus may have excellent physical properties, and thus may be preferred.

In an embodiment of the present disclosure, the solution polymerization method for the ethylene-α-olefin copolymer may further include introducing an inert gas, which may be introduced at an internal reactor pressure of 10 to 40 bar, 10 to 30 bar, or 20 to 30 bar.

The inert gas may be introduced after ethylene is introduced into the reactor, and this may be preferred because the internal reactor pressure, which decreases as ethylene is consumed in b) of copolymerizing the ethylene-α-olefin copolymer, may be maintained at 10 to 100 bar as described above.

The inert gas is not particularly limited, but as a non-limiting example, may be helium, neon, or argon, and using argon may be preferred from the perspective of providing a safer solution polymerization method for the ethylene-α-olefin copolymer.

In an embodiment of the present disclosure, the solution polymerization method for the ethylene-α-olefin copolymer may further include an aluminum scavenger, and it may be preferred that the scavenger be introduced before the ethylene, the transition metal compound, and the cocatalyst are introduced.

The solution polymerization method for the ethylene-α-olefin copolymer further including the scavenger may produce a high-purity ethylene-α-olefin copolymer by removing oxygen, moisture, and impurities, and the like, contained in the α-olefin composition, and thus may be preferred.

In an embodiment of the present disclosure, the aluminum scavenger may be at least one selected from the group consisting of trimethylaluminum, triethylaluminum, tripropylaluminum, triisobutylaluminum, and trihexylaluminum, and the like, and in another embodiment, using triisobutylaluminum alone may produce a higher-purity ethylene-α-olefin copolymer, though not necessarily limited thereto.

In an embodiment of the present disclosure, the aluminum scavenger may be introduced in an amount of 0.5 to 2 μmol or 0.5 to 1.5 μmol per 1 L of the α-olefin composition, though not necessarily limited thereto.

In an embodiment of the present disclosure, in the solution polymerization method for the ethylene-α-olefin copolymer, a polymerization reaction temperature may be 30 to 200 °C, and in another embodiment, the temperature may be 50 to 150 °C or 60 to 100 °C.

The polymerization reaction temperature in the aforementioned range results in high activity of the transition metal compound, such that the polymerization processability of the solution polymerization method for the ethylene-α-olefin copolymer may be excellent. In addition, because the content of unreacted ethylene and α-olefin is low, the process of recycling unreacted monomers and the volume of process equipment may be reduced. However, the temperature is not necessarily limited thereto, provided that the physical properties of the produced ethylene-α-olefin copolymer are not impaired.

Hereinafter, the present disclosure will be described in more detail with reference to Examples and Comparative Examples. The following Examples and Comparative Examples are provided for illustrative purposes only and are not intended to limit the scope of the present disclosure.

[Measurement Methods]

1. Gel Permeation Chromatography (GPC) Measurement

The weight average molecular weight and polydispersity index (PDI) were determined by measuring a solution of the ethylene-α-olefin copolymer dissolved in trichlorobenzene using a GPC system (Polymer Char, GPC-6) equipped with a column (Agilent, PL gel Olexis column) at 160 °C with a flow rate of 1.0 mL/min.

2. Measurement of Change in Weight Average Molecular Weight according to Hydrogen Input Amount

The change in weight average molecular weight was expressed as the ratio $M_{w1}/M_{w0}$, where $M_{w1}$ is the weight average molecular weight of an ethylene-1-octene copolymer produced without the addition of hydrogen gas and $M_{w0}$ is the weight average molecular weight of an ethylene-1-octene copolymer produced with 20,000 ppm of hydrogen gas under the same reaction conditions (transition metal compound, cocatalyst, temperature, etc.). The weight average molecular weight was measured using the same GPC method described above.

3. Density Measurement

The density was measured in accordance with ASTM D1505.

4. Melt Flow Index (MI) Measurement

The melt flow index was measured in accordance with ASTM D1238. After melting the sample at 190 °C, the melt flow index (g/10 min) was determined under a load of 2.16 kg.

[Preparation Example 1]

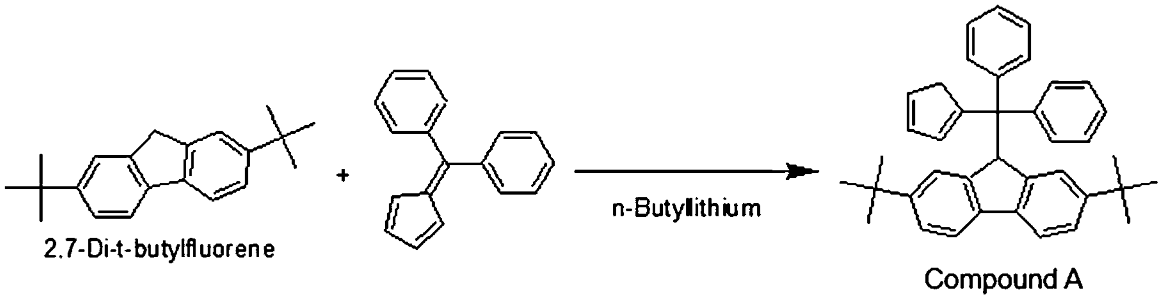


After dissolving 2.00 g (7.2 mmol) of 2,7-di-t-butylfluorene in 30 ml of diethyl ether, 4.7 ml of n-butyllithium (1.6 M in hexane) was slowly added at room temperature, followed by stirring at the same temperature for 12 hours. Subsequently, 1.65 g (7.2 mmol) of diphenylfulvene was slowly added to the stirred solution, and the mixture was then stirred at 80 °C for 12 hours. After completion of stirring, the solution was filtered, and the filtrate was dried in an oven to obtain 2.67 g (5.2 mmol) of Compound A in 73 % yield.

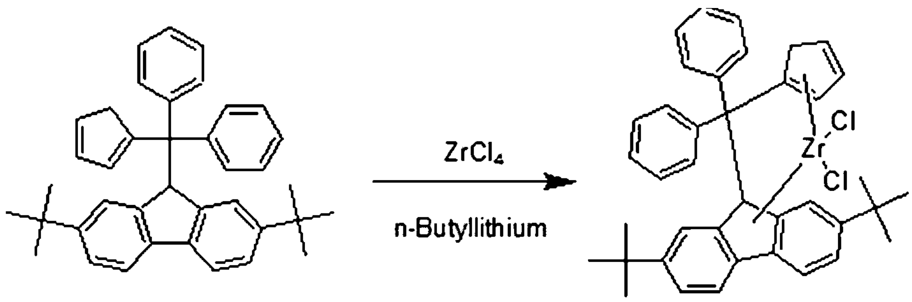


Compound A Compound B

After dissolving 1.0 g (1.97 mmol) of the obtained Compound A in 20 ml of ether, 2.6 ml of n-butyllithium (1.6 M in hexane) was slowly added at -30 °C. The mixture was then warmed to room temperature and stirred for 12 hours, after which the temperature was lowered back to -30 °C and 458 mg (1.97 mmol) of $ZrCl_4$ was added. The mixture was then warmed to room temperature and stirred for 12 hours to allow the reaction to proceed. After completion of the reaction, the solvent was removed and the dried product was immersed in toluene to wash residual impurities, followed by oven drying to remove the toluene, thereby obtaining 1.07 g of Compound B in 81 % yield. NMR analysis of the prepared Compound B [1H-NMR (CDCl3, 300 MHz)] confirmed its formation, with the following peaks observed: 8.07 (d, 2H), 7.99 (d, 2H), 7.92 (d, 2H), 7.63 (dd, 2H), 7.48 (dt, 2H), 7.39 (dt, 2H), 7.32-7.28 (m, 2H), 6.38-6.36 (m, 4H), 5.71 (t, 2H), 1.07 (s, 18H).

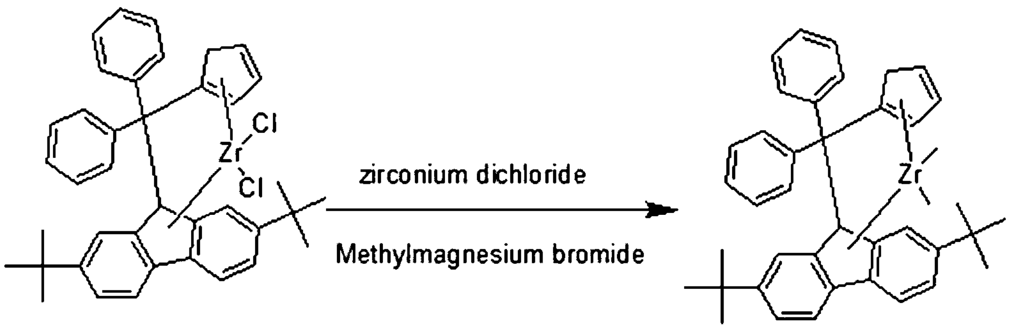


Compound B Preparation Example 1

Finally, after dissolving 0.5 g (0.75 mmol) of the obtained Compound B in 10 ml of toluene, 0.75 ml of methylmagnesium bromide (3.0 M in ether) was slowly added at - 30 °C. The mixture was then warmed to room temperature and stirred for 12 hours to allow the reaction to proceed. After completion of the reaction, the solvent was removed and the product was immersed in hexane to wash impurities, followed by oven drying, thereby obtaining 375 mg of Preparation Example 1 in 75 % yield. NMR analysis of the prepared Preparation Example 1 [1H-NMR (CDCl3, 300 MHz)] confirmed its formation, with the following peaks observed: 8.12 (d, 2H), 7.97 (d, 2H), 7.87 (d, 2H), 7.48 (dd, 2H), 7.39 (dt, 2H), 7.31-7.20 (m, 4H), 6.31 (t, 2H), 6.23 (d, 2H), 5.50 (t, 2H), 1.06 (s, 18H), - 1.68 (s, 6H).

[Preparation Example 2]

After adding 4 ml of sodium cyclopentadienylide (2.4 M in THF) to 20 ml of hexane, 1.38 g (10.08 mmol) of n-BuBr was slowly added at -30 °C. The mixture was then warmed to room temperature and stirred for 12 hours. After filtering the solution to remove salts, 6.6 ml of n-butyllithium (1.6 M in hexane) was slowly added at -30 °C. The mixture was then warmed to room temperature and stirred for 12 hours. To the stirred solution, 1.75 g (9.6 mmol) of benzophenone was slowly added at -30 °C, after which the mixture was warmed to room temperature and stirred for 12 hours. A 10 wt% HCl aqueous solution was then added, and the product was extracted with pentane. The extracted product was then purified via column chromatography (Polymer Char, GPC-6) to obtain 1.65 g of 2-butyl-6,6-diphenylpentafulvene in 60 % yield.

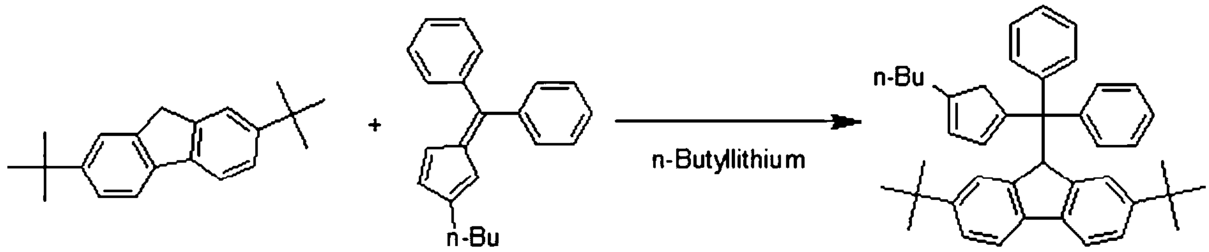


2,7-Di-t-butylfluorene 2-butyl-6,6-diphenylpentafulvene Compound C

After dissolving 1.00 g (3.6 mmol) of 2,7-di-t-butylfluorene in 15 ml of diethyl ether, 2.4 ml of n-butyllithium (1.6 M in hexane) was slowly added at room temperature, followed by stirring at the same temperature for 12 hours. Subsequently, 1.03 g (3.6 mmol) of the obtained 2-butyl-6,6-diphenylpentafulvene was slowly added to the stirred solution at room temperature, followed by stirring at the same temperature for 12 hours. After completion of stirring, the solution was filtered and the filtrate was dried in an oven to obtain 854 mg (1.5 mmol) of Compound C in 42 % yield.

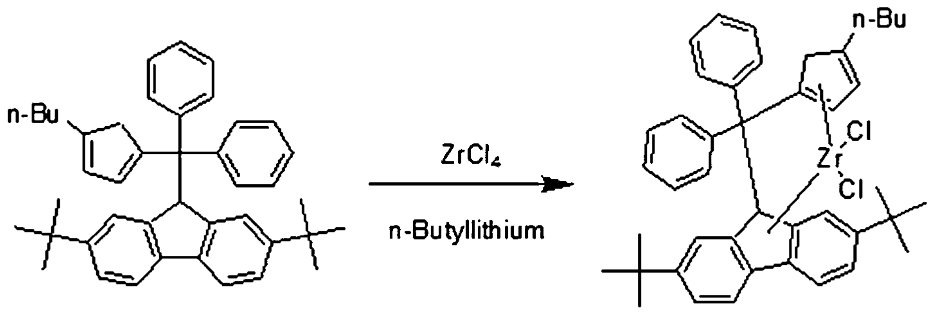


Compound C Compound D

After dissolving 0.5 g (0.89 mmol) of the obtained Compound C in 10 ml of ether, 1.2 ml of n-butyllithium (1.6 M in hexane) was slowly added at -30 °C. The mixture was then warmed to room temperature and stirred for 12 hours, after which the temperature was lowered back to -30 °C and 207 mg (0.89 mmol) of $ZrCl_4$ was added. The mixture was then warmed to room temperature and stirred for 12 hours to allow the reaction to proceed. After completion of the reaction, the solvent was removed and the dried product was immersed in toluene to wash residual impurities, followed by oven drying to remove the toluene, thereby obtaining 224 mg of Compound D in 35 % yield. NMR analysis of the prepared Compound D [1H-NMR (CDCl3, 300 MHz)] confirmed its formation, with the following peaks observed: 8.06-7.85 (m, 6H), 7.59-7.22 (m, 8H), 6.27 (d, 2H), 6.02 (m, 1H), 5.57 (m, 1H), 5.31 (m, 1H), 2.37 (m, 2H), 1.53-0.85 (m, 9H), 1.02 (s, 18H).

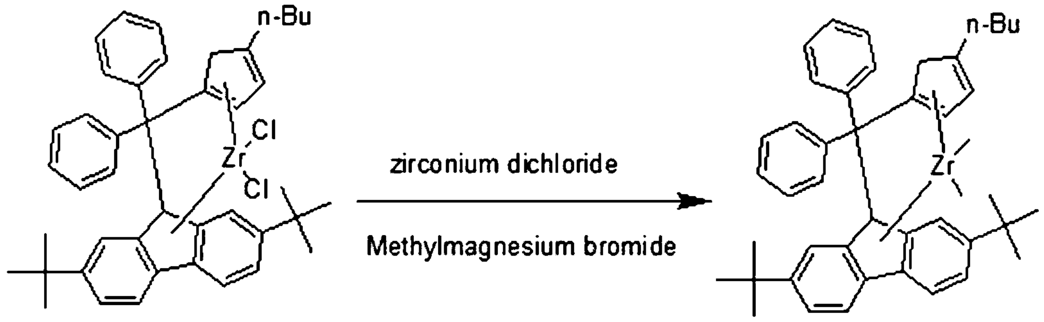


Compound D Preparation Example 2

Finally, after dissolving 0.224 g (0.31 mmol) of the obtained Compound D in 5 ml of toluene, 0.75 ml of methylmagnesium bromide (3.0 M in ether) was slowly added at - 30 °C. The mixture was then warmed to room temperature and stirred for 12 hours to allow the reaction to proceed. After completion of the reaction, the solvent was removed and the product was immersed in hexane to wash impurities, followed by oven drying, thereby obtaining 138 mg of Preparation Example 2 in 65 % yield. NMR analysis of the prepared Preparation Example 2 [1H-NMR (CDCl3, 300 MHz)] confirmed its formation, with the following peaks observed: 8.10-7.80 (m, 6H), 7.44-7.14 (m, 8H), 6.16 (d, 2H), 5.98

(m, 1H), 5.36 (m, 1H), 5.16 (m, 1H), 2.31 (m, 2H), 1.58-0.81 (m, 9H), 1.02 (s, 18H), -1.77 (d, 6H).

[Comparative Preparation Example 1]

Comparative Preparation Example 1 was obtained by reacting in the same manner as in Preparation Example 1, except that 9H-fluorene was used instead of 2,7-di-t-butylfluorene.

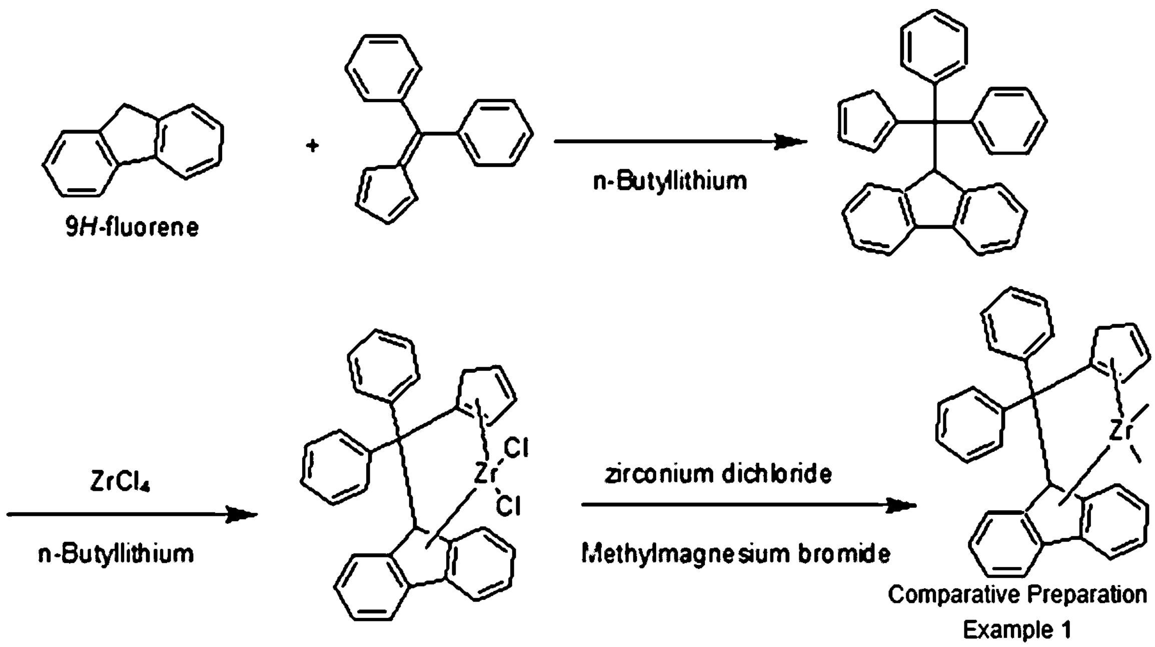


[Comparative Preparation Example 2]

Comparative Preparation Example 2 was obtained by reacting in the same manner as in Preparation Example 1, except that 9H-fluorene was used instead of 2,7-di-t-butylfluorene and n-butyl-substituted diphenylpentafulvene was used instead of diphenylpentafulvene.

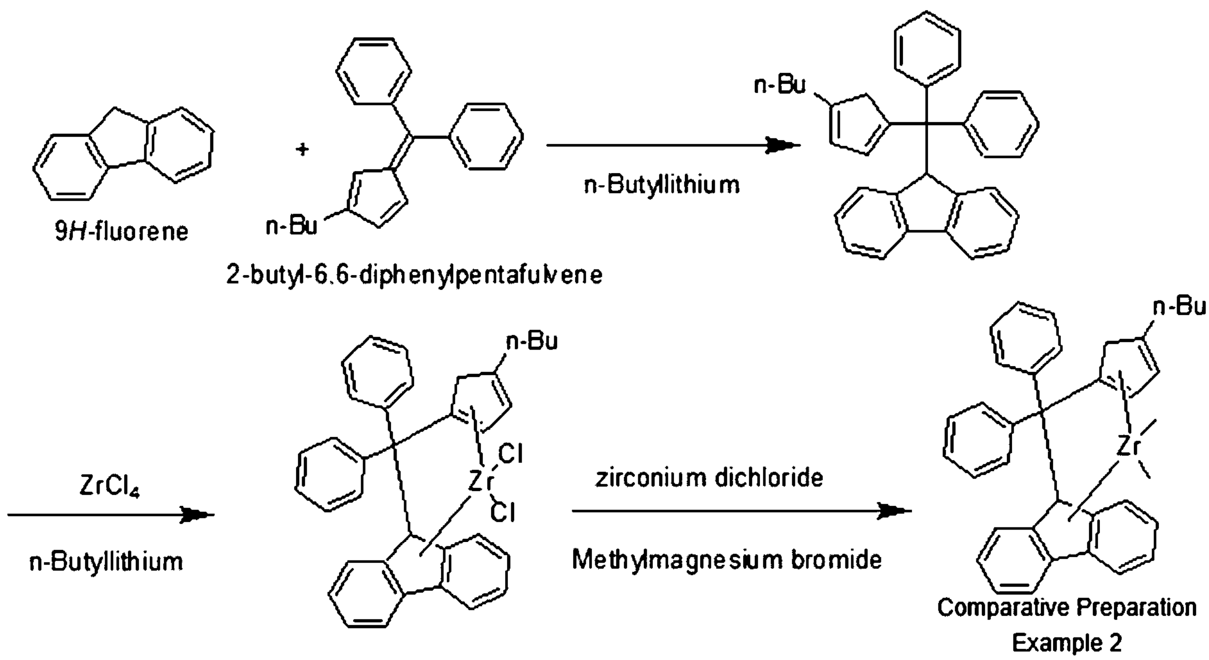

[Comparative Preparation Example 3]

A transition metal compound represented by Formula 2 was obtained by reacting in the same manner as described in U.S. Patent No. 5,272,236 (Nov. 29, 1993).

[Formula 2]

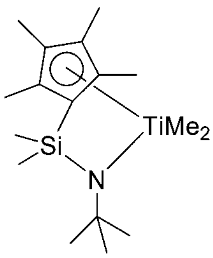

[Examples 1 to 6 and Comparative Examples 1 to 6]

Using a vacuum pump, a 2-liter autoclave reactor was evacuated to a low pressure of 0.3 torr or less to remove moisture and impurities therein, and then purged with argon (Ar) gas for at least 30 minutes while raising the reactor temperature to 60 °C.

A hexane solution containing 1-octene at a concentration of 0.8 M was charged into the heated reactor, and 2 ml of triisobutylaluminum (TiBAL, 1 M) was added as a scavenger. Hydrogen was then introduced in the amount shown in Table 1 below, based on the total amount of feed materials charged into the reactor. The reactor was then stirred at 500 rpm while raising the temperature to 80 °C; and upon reaching 80 °C, 2 μmol of the transition metal compound shown in Table 1 below was charged, and ethylene was introduced to 20 bar. After charging the catalyst and ethylene, argon was continuously introduced to maintain the internal reactor pressure at 25 bar, and 12 μmol of dimethylanilinium tetrakis(pentafluorophenyl)borate was additionally added as a cocatalyst into the pressurized reactor.

The reactor, containing the cocatalyst and maintained at a constant pressure with argon gas, was heated from 80 °C to 120 °C to carry out the polymerization reaction. After 5 minutes of polymerization, the argon supply was stopped to terminate the reaction.

The molten polymer inside the reactor was transferred to a separator through the reactor outlet to separate unreacted ethylene and 1-octene from the hexane solvent, and the polymer was dried in a vacuum oven at 80 °C for 12 hours to obtain an ethylene-1-octene copolymer.

Thereafter, the properties of the obtained ethylene-1-octene copolymer were measured according to the aforementioned measurement methods and are summarized in Table 1 below.

[Table 1]

| | Catalyst Type | Activity (kg mPO/g cat.h) | Hydrogen (ppm) | Weight Average Molecular Weight (g/mol) | Change in Molecular Weight ($M_{w1}/M_{w0}$) | PDI | **Density** (g/cc) | MI (g/10min) |
|---|---|---|---|---|---|---|---|---|
| Example 1 | Preparation Example 1 | 551 | 0 | 146,100 | 4.29 | 2.9 | 0.874 | 1.34 |
| Example 2 | | 556 | 10,000 | 56,049 | | 2.8 | 0.874 | Not measurable |
| Example 3 | | 561 | 20,000 | 34,059 | | 2.7 | 0.875 | Not measurable |
| Example 4 | | 524 | 30,000 | 26,852 | | 2.7 | 0.874 | Not measurable |
| Example 5 | Preparation Example 2 | 482 | 0 | 121,265 | 2.94 | 3.3 | 0.872 | 3.91 |
| Example 6 | | 445 | 20,000 | 41,211 | | 3.4 | 0.872 | Not measurable |

(continued)

| | Catalyst Type | Activity (kg mPO/g cat.h) | Hydrogen (ppm) | Weight Average Molecular Weight (g/mol) | Change in Molecular Weight ($M_{w1}/M_{w0}$) | PDI | **Density** (g/cc) | MI (g/10min) |
|---|---|---|---|---|---|---|---|---|
| Comparative Example 1 | Comparative Preparation Example 1 | 442 | 0 | 124,580 | 1.61 | 1.4 | 0.876 | 3.24 |
| Comparative Example 2 | | 384 | 20,000 | 77,422 | | 1.5 | 0.877 | 12.0 |
| Comparative Example 3 | Comparative Preparation Example 2 | 403 | 0 | 100,235 | 1.33 | 1.7 | 0.880 | 2.08 |
| Comparative Example 4 | | 415 | 20,000 | 75,334 | | 1.5 | 0.879 | 9.56 |
| Comparative Example 5 | Comparative Preparation Example 3 | 460 | 0 | 73,464 | 1.45 | 1.5 | 0.884 | 7.48 |
| Comparative Example 6 | | 345 | 20,000 | 50,694 | | 1.8 | 0.885 | 15.6 |

Referring to Table 1, in the case of Examples 1 to 6, it can be seen that there is a significant difference of approximately 2- to 4-fold in the weight average molecular weight between the ethylene-1-octene copolymer prepared without hydrogen and the ethylene-α-olefin copolymers prepared with increased hydrogen input.

Taking Example 1 as an example, when only the hydrogen input was adjusted under the same catalyst mixture, monomers, and temperature conditions in the same reactor, Example 2 (in which 10,000 ppm of hydrogen was introduced) showed a weight average molecular weight of 56,049 g/mol, representing a reduction of more than 2-fold. Furthermore, in the case of Example 3 (in which 20,000 ppm of hydrogen was introduced), the weight average molecular weight decreased by more than 4-fold. In the case of Example 4 (in which 30,000 ppm of hydrogen was introduced), the molecular weight reduction ratio was more than 5.3-fold. These results demonstrate that the reduction ratio of the weight average molecular weight of the prepared ethylene-α-olefin copolymer varies very significantly depending on the hydrogen input amount.

In contrast, in the case of Comparative Examples 1 to 6, the reduction ratio of the weight average molecular weight of the prepared ethylene-1-octene copolymers according to the hydrogen input amount was very small (2-fold or less). The range of variation was therefore not large, and it can be seen that the preparation of various polymers having various molecular weights is not possible within the same reaction system.

Additionally, it was confirmed that the ethylene-1-octene copolymers prepared in Examples 1 to 4 have a density of 0.9 g/cc or less, preferably 0.880 g/cc or 0.879 g/cc or less, and more preferably 0.875 g/cc or less, which is very low, and have a broad PDI of 2.0 or more, 2.5 or more, 2.7 or more, 2.8 or more, or 2.9 or more, preferably 3.0 or more, and more preferably 3.3 or 3.4.

In contrast, it was confirmed that the ethylene-1-octene copolymers prepared in Comparative Examples 1 to 6 have a density of 0.875 g/cc or more, which is higher compared to those of Examples 1 to 6, and have a narrower PDI compared to those of Examples 1 to 6.

Accordingly, the solution polymerization method for an ethylene-α-olefin copolymer using the transition metal compound according to the present disclosure can not only provide an ethylene-α-olefin copolymer having a low density and a broad molecular weight distribution, but can also easily produce ethylene-α-olefin copolymers having a very wide range of weight average molecular weights simply by adjusting the hydrogen input amount.

In other words, the solution polymerization method for the ethylene-α-olefin copolymer is highly sensitive to hydrogen concentration, and accordingly, the molecular weight can be controlled over a very wide range depending on the hydrogen concentration. Thus, the method can provide various ethylene-α-olefin copolymers each having molecular weights that differ by at least 2-fold or at least 4-fold under the same catalyst mixture, cocatalyst, monomer, and reaction temperature conditions.

Accordingly, the spirit of the present disclosure should not be limited to the embodiments described herein. All equivalents and equivalent modifications to the claims set forth below, as well as the claims themselves, fall within the scope of the present disclosure.

## Claims

**1.** A solution polymerization method for an ethylene-α-olefin copolymer, the solution polymerization method using a

catalyst composition comprising a transition metal compound represented by Formula 1 and a cocatalyst, wherein the ethylene-α-olefin copolymer has a density of 0.90 g/cc or less as measured according to ASTM D1505 and a polydispersity index (PDI) of 2.0 or more:

[Formula 1]

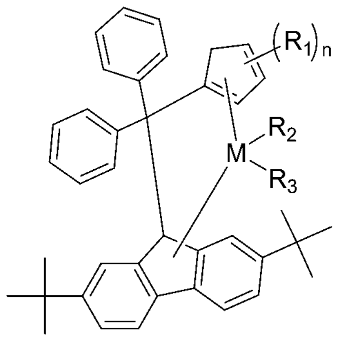

wherein, in Formula 1,

M is a metal of Group 4 of the periodic table;
$R_1$ is a linear or branched $C_1$-$C_7$ alkyl;
$R_2$ and $R_3$ are each independently hydrogen, a linear or branched $C_1$-$C_7$ alkyl, a $C_4$-$C_{20}$ cycloalkyl, or a $C_6$-$C_{20}$ aryl; and
n is an integer of 0 to 3.

**2.** The solution polymerization method for an ethylene-α-olefin copolymer according to claim 1, wherein, in Formula 1,

M is Zr or Ti;
$R_1$ is a linear or branched $C_1$-$C_4$ alkyl;
$R_2$ and $R_3$ are each independently a linear or branched $C_1$-$C_4$ alkyl; and
n is 0 or 1.

**3.** The solution polymerization method for an ethylene-α-olefin copolymer according to claim 1,

wherein the method satisfies Expression 1:

[Expression 1]

$$2 \leq M_{w1}/M_{w0}$$

wherein, in Expression 1,
$M_{w1}$ is a weight average molecular weight of the ethylene-α-olefin copolymer produced when hydrogen is not introduced; and
$M_{w0}$ is a weight average molecular weight of the ethylene-α-olefin copolymer produced when hydrogen is introduced at 20,000 ppm relative to a total amount of feed materials.

**4.** The solution polymerization method for an ethylene-α-olefin copolymer according to claim 1, wherein the ethylene-α-olefin copolymer has a weight average molecular weight of 10,000 to 200,000 g/mol.

**5.** The solution polymerization method for an ethylene-α-olefin copolymer according to claim 1, wherein the solution polymerization method is performed at an internal reactor pressure of 10 to 100 bar.

**6.** The solution polymerization method for an ethylene-α-olefin copolymer according to claim 1, wherein a polymerization reaction temperature of the solution polymerization method is 30 to 200 °C.

**7.** The solution polymerization method for an ethylene-α-olefin copolymer according to claim 1,

wherein the cocatalyst is at least one selected from the group consisting of N,N-diethylanilinium tetrakis(pentafluorophenyl)borate, N,N-2,4,6-pentamethylanilinium tetrakis(pentafluorophenyl)borate, and N,N-dimethylanilinium tetrakis(3,5-bis(trifluoromethyl)phenyl)borate.

**8.** The solution polymerization method for an ethylene-α-olefin copolymer according to claim 1, wherein the solution polymerization method uses at least one solvent selected from the group consisting of n-hexane, n-heptane, n-butane, n-pentane, n-octane, and cyclohexane.

**9.** The solution polymerization method for an ethylene-α-olefin copolymer according to claim 1, wherein the ethylene-α-olefin copolymer is obtained by copolymerizing ethylene with at least one α-olefin selected from the group consisting of 1-octene, 1-hexene, and 1-butene.

**10.** The solution polymerization method for an ethylene-α-olefin copolymer according to claim 1, wherein the ethylene-α-olefin copolymer has ethylene repeat units of 50 to 99 mol%, based on the total repeat units.

**11.** The solution polymerization method for an ethylene-α-olefin copolymer according to claim 1, wherein the ethylene-α-olefin copolymer has a melt flow index of 0.1 to 1,500 g/10min under a 2.16 kg load as measured according to ASTM D1238.

**12.** The solution polymerization method for an ethylene-α-olefin copolymer according to claim 1, wherein the solution polymerization method comprises:

a) preparing an α-olefin composition by mixing α-olefin with a solvent; and
b) preparing the ethylene-α-olefin copolymer through polymerization by introducing the catalyst composition into the α-olefin composition and introducing ethylene into a reactor.

**13.** The solution polymerization method for an ethylene-α-olefin copolymer according to claim 12, wherein the solution polymerization method further comprises introducing hydrogen in b).

**14.** The solution polymerization method for an ethylene-α-olefin copolymer according to claim 1, wherein the solution polymerization method further comprises at least one aluminum scavenger selected from the group consisting of trimethylaluminum, triethylaluminum, tripropylaluminum, triisobutylaluminum, and trihexylaluminum.

## INTERNATIONAL SEARCH REPORT

International application No. **PCT/KR2024/009000**

**A. CLASSIFICATION OF SUBJECT MATTER**

**C08F 210/16**(2006.01)i; **C08F 4/6592**(2006.01)i; **C08F 4/659**(2006.01)i; **C08F 2/04**(2006.01)i; **C08F 2/44**(2006.01)i

According to International Patent Classification (IPC) or to both national classification and IPC

**B. FIELDS SEARCHED**

Minimum documentation searched (classification system followed by classification symbols)

C08F 210/16(2006.01); C08F 10/02(2006.01); C08F 2/04(2006.01); C08F 4/645(2006.01); C08F 4/6592(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 전이금속(transition metal), 촉매(catalyst), 조촉매(co-catalyst), 에틸렌(ethylene), 알파올레핀(alpha-olefin), 밀도(density), 분자량분포(Mw/Mn, PDI, Poly Dispersity Index)

**C. DOCUMENTS CONSIDERED TO BE RELEVANT**

| Category* | Citation of document, with indication, where appropriate, of the relevant passages | Relevant to claim No. |
|---|---|---|
| X | KR 10-2001-0041557 A (EXXON CHEMICAL PATENTS INC.) 25 May 2001 (2001-05-25)<br>See paragraphs [0033], [0034], [0037] and [0041]-[0053]; and claims 1-21. | 1-14 |
| X | KR 10-2021-0154818 A (BOREALIS AG) 21 December 2021 (2021-12-21)<br>See claims 1-18; and paragraphs [0226]-[0240], [0313]-[0317] and [0351]-[0357]. | 1,2,4-6,8-12 |
| A | WO 2022-013711 A1 (NOVA CHEMICALS (INTERNATIONAL) S.A.) 20 January 2022 (2022-01-20)<br>See claims 1-12. | 1-14 |
| A | KR 10-2002-0040905 A (EXXON CHEMICAL PATENTS INC.) 30 May 2002 (2002-05-30)<br>See claims 1-38. | 1-14 |
| A | KR 10-2019-0091543 A (BOREALIS AG) 06 August 2019 (2019-08-06)<br>See entire document. | 1-14 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 September 2024** | **30 September 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/009000**

| Patent document cited in search report | Publication date (day/month/year) | Patent family member(s) | Publication date (day/month/year) |
|---|---|---|---|
| KR 10-2001-0041557 A | 25 May 2001 | AT E293132 T1 | 15 April 2005 |
| | | AU 1999-28018 A1 | 20 September 1999 |
| | | BR 9909216 A | 28 November 2000 |
| | | CA 2318246 A1 | 10 September 1999 |
| | | CN 1292007 A | 18 April 2001 |
| | | EP 1060198 A1 | 20 December 2000 |
| | | ES 2252935 T3 | 16 May 2006 |
| | | JP 4275857 B2 | 10 June 2009 |
| | | KR 10-0554775 B1 | 22 February 2006 |
| | | PL 342705 A1 | 02 July 2001 |
| | | US 2002-0007025 A1 | 17 January 2002 |
| | | WO 99-45040 A1 | 10 September 1999 |
| KR 10-2021-0154818 A | 21 December 2021 | BR 112021020239 A2 | 07 December 2021 |
| | | CN 113906059 A | 07 January 2022 |
| | | CN 113906059 B | 12 March 2024 |
| | | EP 3953403 A1 | 16 February 2022 |
| | | JP 2022-528937 A | 16 June 2022 |
| | | SG 11202110971 A | 28 October 2021 |
| | | US 2022-0185923 A1 | 16 June 2022 |
| | | WO 2020-208128 A1 | 15 October 2020 |
| WO 2022-013711 A1 | 20 January 2022 | CA 3185818 A1 | 20 January 2022 |
| | | US 2023-272132 A1 | 31 August 2023 |
| KR 10-2002-0040905 A | 30 May 2002 | AT E284421 T1 | 15 December 2004 |
| | | AU 761531 B2 | 05 June 2003 |
| | | BR 0014119 A | 14 May 2002 |
| | | CA 2397818 A1 | 26 April 2001 |
| | | CN 1125834 C | 29 October 2003 |
| | | DE 69922548 T2 | 05 January 2006 |
| | | EP 1129115 A1 | 05 September 2001 |
| | | ES 2235549 T3 | 01 July 2005 |
| | | HK 1041705 A1 | 19 July 2002 |
| | | JP 2002-528463 A | 03 September 2002 |
| | | KR 10-2001-0099705 A | 09 November 2001 |
| | | MX PA01003977 A | 06 June 2003 |
| | | RU 2232766 C2 | 20 July 2004 |
| | | TW 486489 B | 11 May 2002 |
| | | US 2002-0086958 A1 | 04 July 2002 |
| | | WO 01-29096 A1 | 26 April 2001 |
| KR 10-2019-0091543 A | 06 August 2019 | CN 110337455 A | 15 October 2019 |
| | | EP 3555149 A1 | 23 October 2019 |
| | | JP 2020-502329 A | 23 January 2020 |
| | | KR 10-2543361 B1 | 13 June 2023 |
| | | US 11530280 B2 | 20 December 2022 |
| | | WO 2018-108917 A1 | 21 June 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5272236 A